# EUROPEAN PATENT SPECIFICATION

(11) **EP 0 320 607 B1**
(45) Date of publication and mention of the grant of the patent: **04.01.1995**
(21) Application number: 88118058.2
(22) Date of filing: 29.10.1988
(51) Int. Cl.: G06F 15/16

(54) **Multiprocessor system featuring global data duplication**
Multiprozessorsystem mit Vervielfältigung von globalen Daten
Système multiprocesseur à duplication de données globales

(30) Priority: 17.11.1987 IT 2266687
(43) Date of publication of application: 21.06.1989
(73) Proprietor: BULL HN INFORMATION SYSTEMS ITALIA S.p.A., 10014 Caluso (Torino) (IT)
(72) Inventor: Zulian, Ferruccio, I-20010 Milano (IT)
(74) Representative: Falcetti, Carlo

(56) References cited:
- EP-A- 0 081 056
- EP-A- 0 181 007
- US-A- 4 402 046
- US-A- 4 470 114
- ICL TECHNICAL JOURNAL, vol. 4, no. 3, May 1985, pages 236-247, Stevenage, Herts, GB; B.C. WARBOYS: "VME nodal architecture: a model for the realisation of a distributed system concept"

## Description

This invention relates to a multiprocessor computing system featuring global data multiplication.

A multiprocessor computing system comprises a plurality of independently or semi independently operating intelligent units or processors, which are generally interconnected for communication by a communication bus.

The system may also include other units which are passive, that is operated only under the direction and control of an intelligent unit.

An example of passive unit is a main working memory connected to the communication bus and shared by the intelligent units.

The objective of distributing the system intelligence among a plurality of processors, which may be functionally the same or different, such as central processor or I/O processors is to improve the processing throughput of the system by having different processes and tasks concurrently performed by the various units.

Several multiprocessor computing systems are known whose architecture spans from the loosely coupled architecture, which at the extreme is a set of independent processors which may exchange some information through a bus, to the tightly coupled architecture, which at the extreme is a set of processors which share a plurality of resources such as memories, registers, input output units, and which are conditioned each other for operation.

Both architectures have advantages and trade offs which may be summarized as follows:
Loosely coupled architectures feature high performances of each individual processor but do not enable for an easy real time balancing of the load among processors.

Tightly coupled architectures feature by reverse an easy load balancing and distribution among processors but suffer from the bottleneck consisting in the sharing of common resources through one or more buses (which is also a common resource)

As far the system bus bottleneck is concerned, EP-A-181 007 discloses a BUS broadcasting method and apparatus for a multiprocessor system where any processor which needs to send the same data or message to a plurality of other processors, may set a broadcast mode of operation, get access to the system bus and identify the broadcast mode with an address code.

The address code is detected by all processors and the data to be broadcasted are latched in input buffers. When the message broadcast is completed an interrupt signal is generated in the receiving processors and the related CPU starts an interrupt handling routine.

The disclosed approach provides some advantage in the exchange of interprocessor messages involving a plurality of receiving processors in that avoid the need of getting access to the bus a plurality of times, for transferring the same information to each one of a plurality of processors but is unsuitable forsi- multaneous access to a plurality of local memories because it requires intervention of a plurality of CPU following an interrupt signals, hence an intervention at software level forcing the several CPU to switch from a process to an interrupt handling routine.

Further completion of the information transfer to all the involved processors is not positively assured by a feedback signal from the several processors.

An intermediate approach is the one of having common resources and local resources such as local memories, in each processor, the common resources being accessible to all the processors, through the system bus, the local resources being accessible to the pertaining processor only.

Cache memories, may be viewed in this perspective as local memories.

By this arrangement contention among processors in the access to common resources may be reduced, because most of the information which they must work on, may be stored and handled by the local resources, but in order to make available the work results to the other processors, a copy of the work done, must be available in the common resources, which again involves some occupation of the system bus for both writing and reading the requested information and processors activity for performing such operations.

The trade off is further increased by the need to assure congruence among information stored in local resources and the copy information which is stored in the common working memory.

To overcome these trade offs it is strictly mandatory that any information which may be of interest to any of the processor be always stored in common resources, and not duplicated in local resources. The only exception to this requirement may be considered for unmodifiable information, such as operating system instructions which do not contain variable parameters and addresses.

They are read only information and can be duplicated at will in any of the local memories.

An alternative approach which has been proposed leads to the concept of shared global resources and may be exemplified by European patent Application published with N. 0106556.

In summary each processor in a multiprocessor system may have its own local resources, namely a local memory, which needs not to be accessed through the system bus, but the same local resources may be viewed as distributed common resources, accessible by any processor in the system, through the system bus.

Clearly this architecture provides some advantage, frees from the above mentioned restrictions, but in order to provide increased performances, still requires that most if not all of the information required by more than one processor be stored in a common non local resource and still accessed through the system bus.

Thus the bottleneck of system bus and common memory sharing, is still present, even if relieved at same extent.

The present invention further improves the efficiency of a multiprocessor system architecture, wether tightly or loosely coupled, featuring common and/or distributed resources, by providing a new use of distributed resources and circuits which enable such new use; it is carried out as claimed in claim 1.

The basic concept is to have global data, id est modifiable information required by more than one processor, duplicated and stored in a local memory of each of the processors composing the system and a write mechanism which by hardware, without need of software intervention, each time a global data is modified in a local memory provides to correspondingly change the same global data in all other local memories.

Thus global data, may be read by each processors by getting access to its own local memory, without need to resort to common memory through the sistem bus, whilst system bus access is required only in case a global data need to be modified through a write operation, in a local memory, which implies the need to reference through the system bus, the other local memories for a corresponding write operation.

Considering that for any kind of modifiable information the number of times it is read largely exceed the number of times it is modified and rewritten (in the average more that 2 times) considerable performance increase is achieved.

Moreover the concept of "global data" is not rigid and may be tailored to achieve even higher performance increases.

For istance "global data" may be defined as that shared and modifiable pieces of information which are likely to remain unchanged over a period of time during which they are read out by the same or different processors, more than a preestablished number of time such as 5 or 10.

These and other advantages and the implementing features of the invention will appear more clearly from the following description and from the related drawing where:
- Figure 1 is a block diagram of a multiprocessor computing system featuring global data multiplation in each of a plurality of local memories,according to the invention.
- Figure 2 shows the format structure of a memory address in the system of Figure 1.
- Figure 3 shows a preferred form of embodiment for an interface unit of the processors in the system of Fig. 1.
- Figure 4 shows a preferred embodiment of additional circuits in the interface unit of Fig. 3, for obtaining an acknowledge signal of global data write operation performed in all the processors.
- Figure 5 shows in timing diagram the operation of the circuits of Fig. 4.

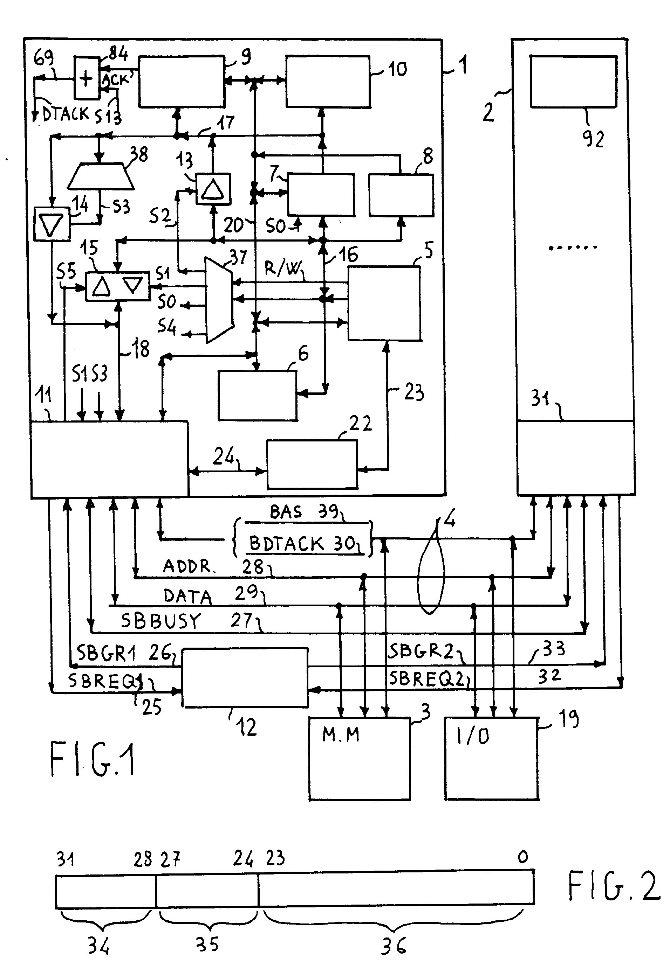

Figure 1 is a block diagram of a multiprocessor computing system featuring global data multiplation.

The preferred embodiment of the system is built up with standard components, well established on the market.

In particular, the system comprises two processors 1,2 identical each other, a working main memory MM 3 and an I/O control unit 19.

The two processors, the main memory 3 and the I/O control unit 19 are connected together by a standard VME BUS 4 or system bus.

The structure of and the dialogues performed on the bus 4 are described in detail in the pubblication "VME bus Specification Manual, Rev. B published Aug 1982 by the VME bus manufacturers group. This document is referenced for any detailed information not provided in the following.

Access to the bus 4 is controlled by arbitration unit 12 or BUS ARBITER.

Each processor comprises a microprocessor 5, such as the Motorola MC68020, a floating point unit 6, a memory management unit MMU 7, a read only memory ROM 8 for initialization and bootstrapping, a local memory 9, a cache memory 10 and a VME interface unit 11 for connection of the processor to the VME bus.

A detailed description of the MC68020, the memory management unit 7 and the floating point unit 6 may be found in the following publications:
- MC68020 - 32 bit Microprocessor - User Manual - Second Edition - Prentice Hall 1984.
- MC68881- Floating Point coprocessor - User Manual - First Edition - Motorola 1985
- MC68851- Memory Management Unit - Advance Information - Motorola 1986

A set of communication leads, collectively referred to as internal bus connects all these elements.

Basically the internal bus comprises three sections an Address Bus, a Data bus and a control bus.

Forsake of simplicity, figure 1 shows the Address bus and the data bus only.

The Address bus is divided in independent sections, connectable together by means of unidirectional or bidirectional tristate gates 13,14,15.

In particular microprocessor unit 5 has address outputs connected to address bus section 16. MMU 7, ROM 8, gates 13, floating point unit 6 have address inputs connected to address bus section 16. In- puts/outputs of gates 15 are also connected to address bus section 16.

A second address bus section 17 is established between address outputs of MMU7, outputs of gates 13 and address inputs of local memory 9, address inputs of cache 10 and inputs of gates 14.

A third address bus section 18 connects outputs of gates 14, input/ outputs of gates 15 and input/outputs of VME interface unit 11.

A bidirectional data bus 20 connects together input/outputs of microprocessor 5, input/outputs of floating point unit 6, input/outputs of MMU7, local memory 9, cache memory 10, VME interface unit 11 and outputs of ROM 8.

An internal bus arbiter 22 controls access to the internal bus.

Arbiter 22 is connected to microprocessor 5 through a control bus 23 for the exchange of three control signals BREQ ( from arbiter 22 to microprocessor 5),BGRANT (from microprocessor 5 to arbiter 22 ) and BGACK ( from arbiter 22 to microprocessor 5).

The internal bus arbiter 22 is also connected to VME interface unit 11 through a control bus 24 for the exchange of two control signals MYSP (from VME interface unit 11 to arbiter 22) and S5 (from arbiter 22 to VME interface unit 11 ).

VME interface unit is connected to system bus 4 for receiving, transmitting addresses, data signals and control signals for obtaining access to the system bus.

Access to the system bus is controlled by a VME BUS ARBITER 12.

When processor 1 needs access to the system bus, VME interface unit 11 asserts a SBREQ1 signal on lead 25.

On receipt of this signal BUS ARBITER 12, if no higher priority requests are present, asserts signal SBGR1 1 on lead 26.

On receipt of this signal, VME interface unit 11 waits until System Bus if effectively available, which condition is expressed by a signal SBBUSY non asserted on lead 27, then asserts signal SBBUSY on lead 27, and has access to the system bus by placing an address on leads 28, an address strobe signal BAS on a lead of control bus 39 and data information on data leads 29 (for write operation only).

The destination unit, which may be processor 2, main memory 3 or I/O control unit 19, as defined by an address portion, takes the data information and asserts a data acknowledge signal BDTACK on a control bus lead 30.

In case of a read operation, the destination unit asserts BDTACK signal after having placed the requested information on data leads 29.

On receipt of this signal, VME interface unit 11, after having taken the read out information from system bus leads 29, relinquishes control over the bus by negating signal SBBUSY.

Clearly processor 2 may have the same architecture of processor 1, and particularly a VME interface unit 31 connected to VME BUS ARBITER 12 by leads 32, 33 instead of 25,26 to transmit a signal SBREQ2 and to receive a signal SBGR2.

Before considering more in detail the structure and operation of the VME interface unit 11 orthe processors operation in getting access to distributed storage resources, is advisable to consider how the system memory space (or symply system space) is structured and referenced.

### SYSTEM SPACE ADDRESSING

Figure 2 shows the structure of an address information which references a location in the system space.

An address information is composed of 32 bits.

Azone 34 of such information comprising from instance the most significant bits from 28 to 31 defines with a binary code a "destination space".

For istance a binary destination code 0000 references an internal space.

This means that an address generated within processor 1 (by microprocessor 5 or MMU 7) where the destination code is 0000 references a storage location which is internal to processor 1.

Thus, with reference to fig. 1 the referenced location may be in local memory 9, in ROM memory 8 or in any one of addressable registers, not shown and contained in processor 1.

Which is the unit to be referenced within processor 1 is defined by a zone 35 of the address information;

Such zone, comprising for instance bits 24 to 27 of the address, defines with a binary code a system space.

For instance a space code 0000 may reference a "mapped space" and indicates that the zone 36 of the address must be translated by the MMU 7 from a logical address into a physical address.

A system space code 01XX (X stands for either 1 or 0) may reference an unmapped physical space and indicates that zone 36 is a physical address for local memory 9 and must not be translated.

Likewise, a space code 0101 may reference a register space, and indicates that zone 36 or a portion thereof is a code which identifies one among several registers.

Reconsidering, zone 34 a destination code 0001 may reference a destination space located in processor 1 and a destination code 0010 may reference a destination space located in processor 2.

Thus if the address containing the destination code 0001 is generated within processor 1, the referenced destination space is still internal to processor and code 0001 is synonimous for 0000.

However if the destination code 0001 is generated within processor 2, the reference destination space is not internal to processor 2 but pertains to processor 1,

Likewise, if the address containing destination code 0010 is generated by processor 1, the destination space is withing processor 2 and if destination code 0010 is generated by processor 2 the destination space is still internal to processor 2 and code 0010 is synonimous for 0000.

A further destination code, for instance 0100, may reference a main memory 3 as destination unit.

Likewise another destination code may reference input output unit 19 and other codes may reference further units connected to the system bus and not shown. Obviously there are some contingent restriction, in the combinations of the various destination codes and system space codes.

For instance Main Memory 3 is always addressed with physical addresses and therefore destination code 0100 must be coupled with space code 01XX. It must be noted that main memory 3, although it may be present in the system architecture is not of essence to the architecture or to the present invention.

If destination code 0100 is coupled with space code 0000 the address is first translated by the MMU of the processor which has generated the address (MMU 7 in case of processor 1) into a physical address where the space code is converted into 01XX.

Likewise, a local memory such as local memory 9 may be referenced by microprocessor 5 both with a physical address and a logical address (the logical address being converted by MMU7 in a physical address, but local memory 9 may be referenced by another processor such as processor 2, only by means of a physical address.

Peculiar to the present invention is the fact that a destination code, for instance 1110, is provided with the meaning of global data space.

This code indicates that destination unit is not a particular unit, but all the active processors, such as processor 1 and 2 are to be jointly considered as destination processor.

Therefore an address containing such destination code, references a storage location both in processor 1 as well as processor 2.

This code is used essentially and exclusively for write operations.

By the use of such code, and suitable hardware in the VME interface units such as 11 and 31 it becomes possible to perform a write operation on both a storage location within processor 1 as well as in processor 2 nearly simultaneously and with the execution of the same write instruction. The meaning of the wording "nearly simultaneously" will become clear in the following.

It is now possible to consider the processors operation in getting access to distributed storage resources.

### ACCESS TO DISTRIBUTED STORAGE RESOURCES

With reference to Fig. 1, it is first considered the case of access to local storage resources by processor 1.

Normally microprocessor 5 has control over the internal bus and can place addresses on the address bus 16 and broadcast or receive data on the data bus 20.

When an address is placed on address bus 16 a decoder 37 having inputs connected to address bus 16 decodes both destination code as well as the system space code.

If the destination code is 0000 or 0001 decoder 37 outputs suitable selection signals which depends on the space code and select one among the internal resources.

Specifically if system space code references a register space, an S4 signal is produced for selection of registers banks not shown.

If the system space code 0000 references a mapped space, decoder 37 outputs a selection signal SO for MMU 7.

MMU 7 converts the received logical address into a physical address which is put on bus 17 and, unless the destination code of such physical address is modified into a destination code other than 0000 or 0001, activates cache 10 and local memory 9.

If an address match occurs in the cache 10, and the operation to be performed is a read, the requested information is read out from cache 10 and placed on channel 20 for delivery to microprocessor 5.

If no address match occurs in the cache 10, the requested information is read out from local memory 9.

In case of write operation, the information may be written both into the cache 10 and the local memory 9 ("write through" cache).

If the system space code (01XX) references an unmapped physical space, decoder 37 outputs a selection signal S2 which enable gates 13 to transfer the physical address onto bus 17 and activates cache 10 and local memory 9 which operate as above described.

It may be noted that in performing these operations, for all considered cases, the internal bus arbiter 22, the VME interface 11, and gates 14,15 are not involved.

A different situation arises if processor 1 needs access to external storage resources or if MMU 7 generates a physical address which references, by a destination code other than 0000 or 0001 an external storage resource, that is a resource outside processor 1.

Assume for instance that microprocessor 5 puts on address bus 16 an address where the destination code is 0010, identifying the storage resource as owned by processor 2.

This code is decoded by decoder 37 in a control signal S1 which enables gates 15 to transfer the address code from bus 16 to bus 18 and at the same time controls the VME interface unit 11 to get access to the system bus.

The VME interface unit 11 issues a SBREQ1 signal to VME BUS ARBITER 12, which in due time, responds by asserting SBGR1 signal.

As soon as the system bus is available, VME interface unit 11 asserts SBBUSY signal and puts the address information on address leads 28.

Through address leads 28, the destination code is broadcast to all possible destination units such as processor 2, main memory 3 and I/O control unit 19.

All these units each have a VME interface unit including a decoder or a comparator which compares the destination code with a code indicative of its own unit name.

If the destination code and the name of the unit match, the unit is selected and uses the address to reference an internal storage location where to read a requested information, which is put on data leads 29 or where to write the information which has been put on data leads 29 by the unit which has promoted the transfer, in the example processor 1, through VME interface unit 11, whilst processor 2 is the destination unit.

Assume now that microprocessor 5 puts on address bus 16 a logical address where the destination code is 0000 or 0001, but this address is converted by MMU7 into a pysical address where the destination code is 0010 and which is put on bus 17.

Decoder 37 does not promote any action on VME interface unit 11 but a second decoder 38 having inputs connected to bus 17, detects such code, and generates a control signal S3 which enables gates 14 and at the same time controls VME interface unit 11 to get access to the system bus.

Once access is obtained, the data information transfer is performed as before.

The operation of processor 1 is now considered assuming it has been designated by an address on system bus as the destination unit.

A comparator or decoder, internal to VME interface unit detects a match with the destination code 0001 and its own name and generates a MYSP signal towards the internal bus arbiter 22.

Arbiter 22 transfers such signal (as BREQ) to microprocessor 5.

When microprocessor 5 is ready to relinquish control over the internal bus, it returns a BGRANT signal to arbiter 22 which, upon detecting that the internal bus is effectively available, based on the level of certain signals, asserts signal BGACK towards microprocessor 5 and raises to 1 a signal S5 towards VME interface unit 11.

Thereafter the units connected to the internal bus may be referenced through the address bus and data written into or read out from the referenced unit.

Even if conceptually any unit may be referenced, in practice only the local memory 9, cache 10 and registers not shown are referenced.

Signal S5 is transferred through the VME interface unit 11 to the enabling input of gates 15 which are enabled to transfer the address present on leads 28 and bus 18 to bus 16.

Since an unmapped space is usually designated by space code 01XX, decoder 37 generates S2 signal and the address is transferred from bus 16 to bus 17, through gates 13, for a direct reference to cache unit 10 and local memory 9.

If the space code references a register space, the decoder 37 outputs signal S4 for selection of register banks, not shown.

### GLOBAL DATA MUTLIPLATION

According to the invention each local memory in each of the active processors (such as local memory 9 in processor 1) is intended for storing a copy of global data and every time a global data is written or modified in the local memory of processor 1 it is also written or modified in the local memory of processor 2 (and of any other additional processor if they are more than two).

Assuming that local memory 9 does not initially contain any global data, nor does the local memory in processor 2, the global data will be stored in main memory 3 or in some disk storage unit, controlled by I/O control unit 19.

If global data are stored in main memory 3, processor 1 may read such information by addressing main memory 3 with address where the destination code is 0100 (or another suitable code if global data are stored in a disk mass storage).

Once received, the information may be written by microprocessor 5 into local memory 9 at a preestablished address in which the destination code is set to 1110 and the space code may be set to 0000 (mapped space) or to 01XX (unmapped space).

Clearly if space code is set to 0000 microprocessor 5 will have previously loaded the MMU 7 with suitable information for conversion of logical addresses into physical addresses.

Decoders 37, 38 are peculiar to the invention, in that they decodes destination code 1110, concurrent with a write R/W command issued by microprocessor 5, in a set of control signals, which include S1 plus S2 if the space code is 01XX (unmapped space) and S3 plus SO if the space code is 0000 (mapped space).

Thus not only the local memory 9 (and cache 10) of processor 1, are referenced for storing the global data information, but also the VME interface unit 11 is activated for broadcasting over the system bus a write instruction to other processors.

VME interface units 11 and 31 of processors 1,2 respectively, are peculiar to the invention in that, if not activated by signals S1, S3, they are able to decode destination code 1110 as referencing the processor to which they pertain.

Thus VME interface unit 31 on receipt of destination code 1110 identifies processor 2 as destination unit, and the address present on system bus is transferred within processor 2 through VME unit 31 and elements functionally equivalent to bus 18, gates 15, gates 13 to the local (and cache) memory of processor 2, for writing therein the information which is present on system data bus 29.

Clearly this multiple write or broadcast write operation is performed not only at initialization but at any time that a new information identified as global data is written in any one of the local memories, so that the identity of global data contents of all the local memories is assured during system operation.

As a conseguence, every time a processor needs to read a global data information it can get it from its own local memory or related cache unit without having to resort to a system bus data transfers.

Obviously the constraints intrinsic to information which is shared by multiple processors is still present.

Aset of global data which is currently used by one processor cannot be simultaneously used by other processors which could change it. This can be easily obtained with well established methods of data partitioning into block and the setting (through well established test and set operations) of lock bits which prevents concurrent utilization of the same block by more than one processor.

For completeness of description a preferred implementation of the VME interface unit 11 (or 31) is now described.

### VME Interface Unit

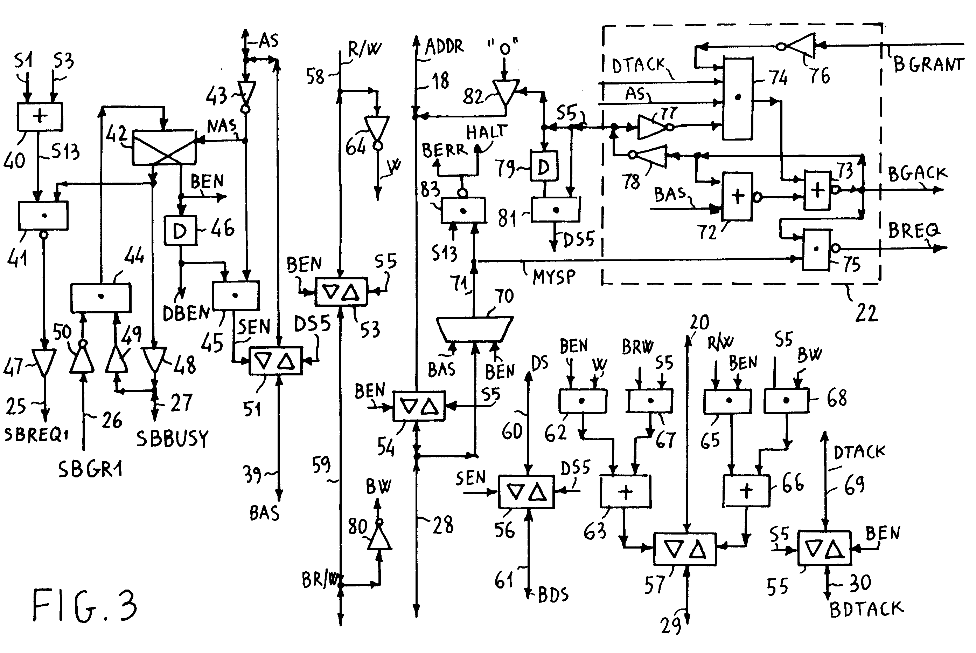

Figure 3 is a detailed block diagram of a preferred embodiment for the VME interface unit 11.

It further shows a preferred embodiment of arbitration unit 22, enclosed in dotted line.

Basically the VME interface unit comprises interface drivers and receivers, bidirectional tristate drivers and logical gates controlling such drivers.

It further comprises logical elements for requesting and getting access to the system bus.

The bus access logic comprises OR 40, NAND 41, JK flip flop 42, NOT 43, AND gates 44,45, a delay element 46, drivers 47,48, receiver 49 and inverting receiver 50.

The interconnection among the elements composing the bus access logic is as shown in Fig. 3 and does not deserve any detailed description beyond the following explaination of logic operation.

Flip flop 42 is normally in reset state being reset and held in reset by NAS signal (negated of AS signal) at level 0.

AS signal is an address strobe signal which is asserted (i.e. put at electrical level 0) by microprocessor 5 (Fig. 1) every time it get access to the internal bus and which is raised to 1 when the internal bus is released.

Thus, when microprocessor 5, by putting and address on the internal address bus 16 and asserting AS signal indicates that resource external to processor 1 has to be addressed, signal S1 or S3 is raised to level 1 and a signal SBREQ1 is asserted (i.e. put at level 0) on lead 25.

In due time, VME arbiter 12 responds by asserting (putting at level 0) signal SBGR1 on lead 26.

As soon as the system bus is available, SBBUSY signal on bus lead 27 raises to 1 and output of AND gate 44 raises to 1, setting flip flop 42.

With the set of flip flop 42 signal SBREQ1 becomes non asserted (it raises to 1) and signal SBBUSY is asserted (i.e. dropped to 0).

Further at direct output of flip flop 42 a BEN signal is raised to 1 and with a delay imposed by delay element 46 a DBEN signal too is raised to 1.

BEN is used to timely enable drivers and receivers in the VME interface unit 11.

DBEN and NAS (obtained by AS through inverter 43) are input to AND gate 45, which outputs a SEN (Strobe Enable) signal. SEN is specifically used to enable drivers devoted to the transfer of strobe signals.

In particular bidirectional driver 51 is enabled in output to transfer on a system bus lead 39 a BAS (Bus Address Strobe) signal.

When the external read/write operation has been completed microprocessor 5 raises to 1 signal AS, which has the effect of resetting flip flop 42, and at the same time raising BAS to 1 and disabling bidirectional driver 51.

As a consequence, SBBUSY on lead 27 is driven high, and BEN, DBEN, SEN are driven low.

In addition to bidirectional driver 51, VME interface unit comprises three bidirectional drivers 53,54,55 and two sets of bidirectional drivers 56,57.

Bidirectional driver 53 controls the transfer of a R/W signal, put by microprocessor 5 on an internal bus lead 58, from internal bus lead 58 to a system bus lead 59 and the transfer of a BR/W signal, put by processors 2 (or any processor other than 1 if more than 2) on system bus lead 59, from lead 59 to internal lead 58.

Driver 53 is enabled in output by signal BEN.

Thus, when BEN=1 signal R/W from microprocessor 5 is put on lead 59 and indicates the requested transfer direction that is a write operation from processor 1 to another destination unit when R/W=0 and a read operation from a destination unit to processor 1 when R/W=1.

Bidirectional driver set 54 controls the transfer of addresses (including destination code and space code) between internal address bus 18 and the system address bus 28.

Set 54 is enabled in output (from processor 1) by signal BEN.

Bidirectional driver 56 controls the transfer of a data strobe signal DS from an internal bus lead 60 to a system bus lead 61 and the transfer of a data strobe signal BDS, put by units other than processor 1 on system bus lead 61, from lead 61 to lead 60.

Driver 56 is enabled in output by signal SEN.

Bidirectional driver set 57 controls the transfer of data between internal data bus 20 and system data bus 29.

Since the transfer direction is dependent non only on the unit promoting the transfer but also on the nature (read/write) of the transfer a very simple logic is used to enable such set.

AND gate 62 receiving as input signals BEN and W (obtained from R/W through inverter 64) provides an enabling signal to driver set 57 through OR gate 63, for a write operation.

AND gate 65 receiving as input signals BEN and R/W provides an enabling signal to driver set 57 through OR gate 66 for a read operation.

Thus, AND gates 62,65 enables driver set 57 when the unit requesting the transfer is processor 1.

AND gates 67,68 which enable driver set 57 when the transfer request comes from the system bus, will be considered later on.

Bidirectional driver 55 controls the transfer of a data acknowledge signal DTACK from an internal bus lead 69 to a system bus lead 30 and the transfer of a system bus data acknowledge signal BDTACK from lead 30 to lead 69. Driver 55 is enabled in input by signal BEN.

The operation of the VME interface unit for system bus access requested by processor 1 is now briefly explained.

Once processor 1 has got access to the system bus and asserted SBBUSYsignal, driver 53, driverset 54 are enabled in output and driver 55 is enabled in input.

Driver set 57 is enabled in input or output depending on level of R/W signal.

Thus an address code and in case a data code (if the operation is a write) are put on system bus.

Immediately thereafter strobe signals BAS and BDS are asserted through drivers 51 and 56 to validate address and in case data.

The destination unit identified by the destination code in the address, responds to the requesting unit by writing the received data or reading the requested data, at the location referenced by the address and asserts signal BDTACK on system bus.

BDTACK has either the meaning of data accepted and stored ( in case of write request) or data available on system bus ( in case of read request).

On receipt of BDTACK through driver 55, processor 1 and specifically microprocessor 5 gets the received data (in case of read request) and frees the system bus by raising AS signal to 1.

By this signal BBUSY is raised to 1 and all the drivers, including bidirectional driver 55, are disabled.

Figure 3 may now be considered with reference to another situation in which the VME interface unit 11, instead of requesting system bus access is a destination unit.

Thus some other unit and specifically processor 2 is owing the system bus and with a suitable destination code (which may either be 0001 or 1110) references processor 1.

A decoder 70 has inputs connected, through permanently enabled receivers, if required, which receivers are not shown, to leads of address bus 28.

It further receives as input signal BAS, from lead 52 and signal BEN.

When signal BAS, BEN are both low, indicating that address code on bus 28 is meaningful and processor 1 is not owning the system bus, decoder 70 is enabled and if the received destination code is 1110 or 0001 a signal MYSP (my space) at level 1 is output on lead 71.

Signal MYSP is input to arbitration unit 22.

Arbitration unit comprises NOR gates 72,73, AND gate 74, NAND gate 75 and inverters 76,77,78 interconnected as shown in Fig. 3.

NAND gate 75 receives as input signal MYSP and signal BGACK in output from NOR 73.

Thus if BGACK is high, indicating that the internal bus is under control of microprocessor 5, on receipt of MYSP gate 75 outputs signal BREQ at level 0. BREQ is received by microprocessor 5, which, when ready to relinquish control over the internal bus, asserts (drops to 0) signal BGRANT.

BGRANT is input to inverter 76, whose output is connected to one input of AND gate 74.

AND gate 74 receives at other inputs signals DTACK, AS and BGACK (through cascaded inverters 77,78).

All these signals, when at level 1 indicate that the internal bus is effectively free.

Thus on receipt of BGRANT, and as soon as the internal bus is available, the AND 74 output raises to 1 and, through NOR 73 asserts (drops to 0) signal BGACK.

Arbiter 22 gets control over the internal bus and passes such control to VME interface unit 11 in form of enabling signal S5, obtained from BGACK through inverter 78.

NOR gate 72 which receives as inputs signal BAS (from the system bus) and BGACK, performs a holding low function on signal BGACK as long as BAS is low too.

Signal S5, as may be seen, is used as enabling signal for enabling in input driver set 54 and for enabling in output driver 55.

As to driver set 57, it is enabled in input or output depending on the level of signal BRW on lead 59.

Signals S5 and BRW are input to AND gate 67 which, through OR gate 63 enables driver set 57 in output (consistently with a read request originated outside processor 1).

Signals S5 and BW (obtained from BRW through inverter 80) are input to AND gate 68 which through OR gate 66 enables driver set 57 in input.

A NAND gate 81, receiving as input signal S5 and a signal obtained from S5 through a delay element 79, produces in output a delayed enabling signal DS5 which is used for enabling in input driver 51 and driver 56.

It is immediately apparent that signals S5 and DS5 perform the same enabling function of signals BEN and SEN but reverse the transfer direction.

In conclusion, when a unit other that processor 1 requests access to resources within processor 1, the destination code present on system bus is decoded, a signal MYSP is generated and as soon as the internal bus is available, arbiter 22 generates signal S5 and the interface gate are properly enabled.

Once the read or write operation has been performed, processor 1 (and more particularly the referenced unit such as local memory 9 within processor 1) asserts on internal bus lead 69 signal DTACK.

On receipt of DTACK low, through driver 55 and system bus lead 30, the requesting unit rises BAS signal on system bus lead 39.

BAS signal in input to NOR 72 of arbiter 22, unlocks signal BGACK which is driven high, whilst signal S5 is driven low, disabling all the interface gates.

In order to complete the description of Fig. 3, two details have to be mentioned.

It may be seen in Figure 3 that signal S5 is further input to the enabling input of a set of drivers 82.

Such drivers have data inputs connected to a "0" level source and the outputs connected to some of the internal bus 18 leads.

The purpose of such arrangement is to force a destination code 0000 (internal space) on address leads, and to prevent decoders 37, 38 from generating signals S1, S3.

Obviously this is only a preferred embodiment. An alternative one, among the possible many, would be to input signal S5 to both decoders 37,38 as a condition which inhibits generation of signals S1.S3.

Another problem which must be avoided is deadlock.

Assume processor 2 has already taken control over the system bus for a transfer involving processor 1 as destination unit but arbiter 22 in processor 1 has not yet obtained from microprocessor 5 the control over the internal bus.

It may happen that at the same time microprocessor 5 tries to get access to the system bus, but no bus grant is given by arbiter 12.

Both processors, would wait undefinitely.

Avery simple solution to this problem, among the many possible ones, is shown in Fig. 3 and consists in NAND gate 83. NAND gate 83 receives as input signal MYSP and signal S1 (the OR of signals S1, S3).

Thus in case processors 1 and 2 compete for access to the system bus the output of NAND gate 83 drops to 0 and asserts a BERR signal as well as a HALT signal.

These signals, received by microprocessor 5, cause it to stop executing the current instruction and to start a retry.

However, before starting a retry an arbitration logic internal to microprocessor 5, detects the BREQ signal pending, grants access to the internal bus and postpones the retry operation until the internal bus is again free.

### GLOBAL DATA WRITE - TIMING CONSIDERATIONS

It is inportant to remind, at this point, that in performing a global data write, more than two units are involved in the process, say a requesting unit and at least two receiving units.

Considering again Figure 1, if microprocessor 5 requests a global data write, not only local memory 9 is involved as destination unit, but also local memory 92 in processor 2.

If processor 5 has got access to the internal bus and has started a global data write operation, local memory 9 is certainly available to receive the address and the write command. It will perform the write operation immediately, with its own execution time, and thereafter will assert signal DTACK on lead 69.

However access to the system bus and to the internal bus of processor 2 will involve some propagation time and waiting time, in addition to the execution time of local memory 92.

As a consequence local memory 92 will assert signal DTACK on a lead internal to processor 2 and signal BDTACK on lead 30 a certain time after assertion of signal DTACK by local memory 9.

Until that time, microprocessor 5 must hold the internal bus and the system bus, and must release them (by raising AS signal to 1) only after BDTACK has been received.

Therefore assertion of signal DTACK by local memory 9 must be ignored and the operation must be led by signal BDTACK received from the system bus.

This can be easily obtained, by masking.

Fig. 1 shows that a signal ACK in output from local memory 9 is input to OR gate 84 which receives at a second input signal S13. Gate 84, has its output connected to lead 69 (DTACK lead).

It is therefore clear that any time VME interface unit 11 is activated, and signal S13 is high, the assertion of signal ACK, owing to the concurrent activation of local memory 11 is prevented from lowering signal DTACK.

In case the system comprises more that two processors it must also be kept in mind that in case of global data write more than one processor asserts, at different time, signal BDTACK on the same bus lead 30.

Thus the first occurring assertion causes signal BDTACK to be lowered to 0 and the late to come assertion cannot be perceived.

An additional bus lead and some additional circuit in the VME interface unit of each of the processor are required to provide an indication that all processors involved in the global data write have asserted their own DTACK signal.

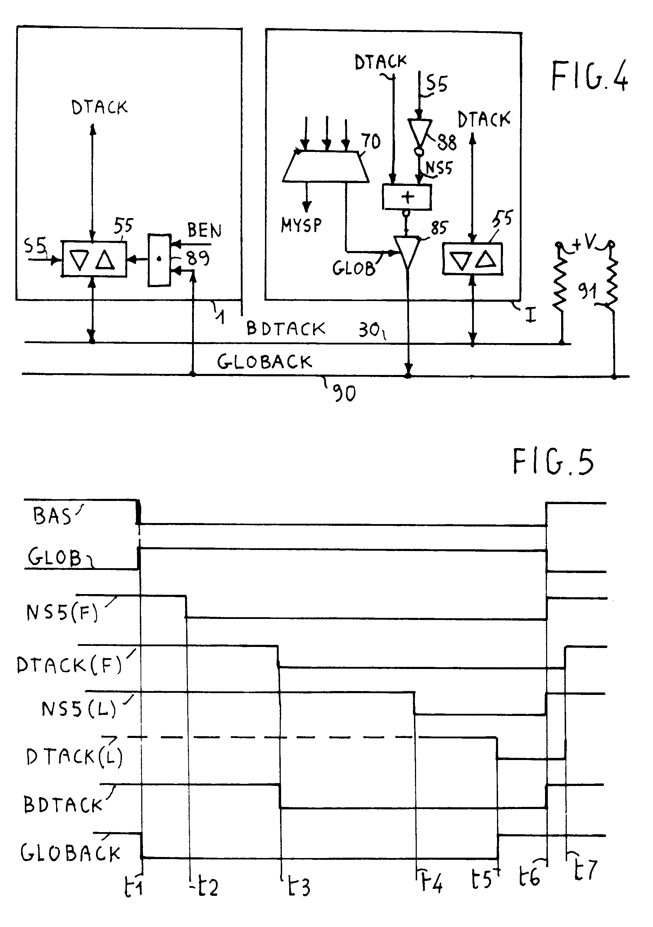

Figure 4 shows a preferred implementation of such circuits and the minor changes required in the circuits of fig. 3.

In fig. 4 block 1 represents processor 1 and block I represents a generic processor among N-1 processors, with N greater than 2.

Processor 1 is considered as requesting processor and processor I is a destination processor.

In addition to the circuits shown in Figure 3 VME interface unit of processor I comprises a further driver 85, NOR gate 87 and inverter 88. Such elements are for generating an additional signal GLOBACK.

In addition to the circuits shown in Figure 3 VME interface unit of processor 1 comprises an AND gate 89 for receiving signal GLOBACK.

It is clear that processor I also comprises a gate equivalent to gate 89, and processor 1 comprises the further elements shown in processor I because the requestor/destination role may be exchanged.

System bus comprises an additional lead 90 for transferring signal GLOBACK.

Lead 90 is connected to a +V voltage source through a pull up resistor 91, not dissimilarly from the other bus leads.

Output of driver 85 is connected to bus lead 90. Input is connected to output of NOR 87.

NOR 87 receives as input signal DTACK and signal NS5 obtained by S5 through inverter 88.

The enabling input of driver 85 is connected to an output of decoder 70 to receive a GLOB signal that raises to 1 when the destination code 1110 is detected.

AND gate 89 receives as input signal BEN and a signal GLOBACK present on lead 90.

The output of AND gate 89 is connected to the enabling input of driver receiver 55 and, when at level 1 enables driver/receiver 55 to input signal BDTACK present on lead 30.

The operation of such circuits is very simple and can be easily understood with reference to the timing diagram of Figure 5.

Assume processor 1 gets access to the system bus for a global data write operation and at time t1 asserts BAS signal.

At the same time in all processors I decoder 70 detects destination code 1110 and raises to 1 signal MYSP and GLOB.

In each processor I access is requested by VME interface unit to the internal bus, but before access is granted signal S5 is at level 0 and therefore NS5 is at level 1.

Therefore at t1, irrespective of the level of DTACK, driver 85 in all processors I outputs a GLOBACK signal at level 0 on lead 90.

At time t2, in a first F of the I processors, access to the internal bus is granted. This implies that in such processor, signal DTACK(F) is at level 1 and remains at level 1 untill the write operation is completed (time t3). As a consequence the output of driver 85 is held down even if signal NS5(F) is dropped.

At time t3 processor F asserts DTACK(F) and consequently BDTACK is asserted. It further attempts to raise signal GLOBACK on lead 90, but the other processor still hold GLOBACK at 0.

As a consequence driver/receiver 55 is still inhibited and prevents assertion of signal DTACK in processor 1.

At time t4 in the last L of the I processor, access to the internal bus is granted and S5(L) is raised to 1 (and NS5(L) is dropped to 0).

At time t5 the last L of the I processors complete the write operation and signal DTACK(L) is asserted.

The assertion of DTACK(L) does not have effect on BDTACK, which is already asserted (at 0 level).

However it does have effect on GLOBACK signal which is raised to 1.

Accordingly by instant t5 receiver 55 is enabled and processor 1 may complete the system bus access by dropping BEN signal and raising BAS signal (time t6).

Thus by instant t6 all system bus signals are raised to 1, and shortly thereafter all DTACK signals are raised to 1 (time t7).

It is clear that the above embodiment is only a preferred one and that different arrangements may be envisioned.

For instance the VME interface units in each of the processor may be buffered with an address register and a data register.

In this case, once a requesting processor has got access to the system bus the address and data registers in each of the destination processors may be simultaneously loaded and thereafter the system bus may be released. The write operation may then be autonomously completed within each destination processor.

Although in the preceding description reference has been made to microprocessors such as the Motorola 68020 as the core of the processors and to VME bus as system bus, this has been done only in order to simplify the description of the system structure and operation.

## Claims

1. Multiprocessor computing system wherein a plurality of processors (1,2) are connected to each other through a system bus (4), each processor comprising a processing unit (5), a local memory (9) and an interface unit (11), the processing unit of one processor having access to the related local memory of said processor without need of getting access to the system bus, a processing unit of any one of the processors having access to the local memory of another processor through said system bus and the interface unit of both processors, an information stored or to be stored in any one of said local memories being referenced by an address code comprising a destination code identifying an information as stored or to be stored in a prestablished one of said local memories, characterized in that:
- said destination code has a predetermined binary configuration which identifies an information as global data, e.g. a modifiable information required by more than one processor,
each processor having:
- first means (7,11,13,14,15,37,38) receiving said destination code and a write control signal generated by said processor, detecting said predetermined binary configuration identifying an information as global data and in response thereto performing a write operation of said information in the related local memory (9) of said processor and concurrently obtaining access to said system bus (4) and broadcasting said global data and a global data write address including said destination code over said system bus(4),
- logic circuits (11,70,22) receiving said destination code from said system bus (4), detecting said predetermined binary configuration of said destination code and in response thereto performing a write operation of said global data in the related local memory and
- second means (90,85,87,89) in said system, responsive to said predetermined binary configuration on said system bus (4) for acknowledging execution of a global write operation (e.g. on all copies of the same global data) to a processor broadcasting said binary configuration over said system bus, once all other processors have accepted said global data and said write address,
whereby said brodcasting processor can complete its system bus access on receipt of said acknowledging.

2. Multiprocessor system as claimed in claim 1 wherein said first means comprises a decoder (37,38) responsive to said predetermined binary configuration to provide a selection signal (S1,S2) which selects both the local memory of the related processor, for a write operation, and the interface unit of the related processor for requesting a system bus access and the broadcasting of a write operation request to all other processors.

3. Multiprocessor system as claimed in claim 1 wherein said logic circuits comprise a decoder (70) responsive both to said destination code referring the related local memory and to said predetermined binary configuration, to provide an access request signal (MYSP) to the related processor, for directing a memory reference present on the system bus to the related local memory.

4. Multiprocessor system as claimed in claim 3 where said decoder (70) has a control input receiving a signal (BEN), said signal being asserted in the related processor when said related processor has obtained access to said system bus, said asserted signal preventing the recognition of said predetermined binary configuration on said system bus,by said decoder (70), when said predetermined binary configuration is issued on said system bus by the related processor.

5. Multiprocessor system as claimed in claim 3 wherein said logic circuits comprise third means (82) for converting said predetermined binary configuration in a destination code referring to the local memory of the related processor.

## Patentansprüche

1. Multiprozessorrechnersystem, bei welchem mehrere Prozessoren (1, 2) miteinander über einen Systembus (4) verbunden sind, jeder Prozessor eine Bearbeitungseinheit (5), einen lokalen Speicher (9) und eine Schnittstelleneinheit (11) aufweist, die Bearbeitungseinheit eines Prozessors Zugriff auf den zugehörigen lokalen Speicher dieses Prozessors hat, ohne Zugriff auf den Systembus zu benötigen, eine Bearbeitungseinheit irgendeines der Prozessoren Zugriff auf den lokalen Speicher eines anderen Prozessors über den Systembus sowie die Schnittstelleneinheit beider Prozessoren hat, und eine Information, die in einem der lokalen Speicher gespeichert ist oder gespeichert werden soll, durch einen Adressencode angesprochen wird, der einen Zielcode aufweist, welcher eine Information als gespeichert oder als zur Speicherung vorgesehen festlegt, in einem vorher festgelegten Speicher unter den lokalen Speichern, dadurch gekennzeichnet, daß:
- der Zielcode eine vorbestimmte Binärkonfiguration aufweist, welche eine Information als globale Daten identifiziert, also als modifizierbare Information, die von mehr als einem Prozessor benötigt wird, wobei jeder Prozessor aufweist:
- eine erste Einrichtung (7, 11, 13, 14, 15, 37, 38), welche den Zielcode und ein von dem Prozessor erzeugtes Schreibsteuersignal empfängt, die vorbestimmte Binärkonfiguration feststellt, die eine Information als Globaldaten identifiziert, und in Reaktion hierauf eine Schreiboperation der Information in den zugehörigen lokalen Speicher (9) des Prozessors durchführt, und gleichzeitig Zugriff auf den Systembus (4) erhält und die globalen Daten sowie eine Globaldaten-Schreibadresse einschließlich des Zielcodes über den Systembus (4) aussendet,
- Logikschaltungen (11, 70, 22), welche den Zielcode von dem Systembus (4) empfangen, die vorbestimmte Binärkonfiguration des Zielcodes erfassen, und in Reaktion hierauf eine Schreiboperation der Globaldaten in dem zugehörigen Lokalspeicher durchführen, und
- eine zweite Einrichtung (90, 85, 87, 89) in dem System, welche auf die vorbestimmte Binärkonfiguration auf dem Systembus (4) reagiert, um die Ausführung einer globalen Schreiboperation zu bestätigen (beispielsweise bezüglich sämtlicher Kopien derselben Globaldaten), für einen Prozessor, welcher die Binärkonfiguration über den Systembus sendet, sobald alle anderen Prozessoren die Globaldaten und die Schreibadresse empfangen haben,
wodurch der sendende Prozessor seinen Systembus-Zugriff beim Empfang der Bestätigung beenden kann.

2. Multiprozessorsystem nach Anspruch 1, bei welchem die erste Einrichtungen einen Dekodierer (37,38) aufweist, derauf die vorbestimmte Binärkonfiguration mit der Bereitstellung eines Auswahlsignals (S1, S2) reagiert, welches sowohl den lokalen Speicher des zugehörigen Prozessors füreine Schreiboperation auswählt, als auch die Schnittstelleneinheit des zugehörigen Prozessors, zur Anforderung eines Systembus-Zugriffs und des Aussendens einer Schreiboperationsanforderung an alle anderen Prozessoren.

3. Multiprozessorsystem nach Anspruch 1, bei welchem die Logikschaltungen einen Dekodierer (70) aufweisen, der sowohl auf den Zielcode reagiert, welcher den zugehörigen lokalen Speicher angibt, als auch auf die vorbestimmte Binärkonfiguration, zur Bereitstellung eines Zugriffsanforderungssignals (MYSP) für den zugehörigen Prozessor, zum Richten einer Speicherbezeichnung, die auf dem Systembus vorhanden ist, an den zugeordneten lokalen Speicher.

4. Multiprozessorsystem nach Anspruch 3, bei welchem der Dekodierer (70) einen Steuereingang aufweist, welcher ein Signal (BEN) empfängt, wobei dieses Signal in dem zugehörigen Prozessor zugeordnet wird, wenn der zugehörige Prozessor Zugriff auf den Systembus erlangt hat, und das zugeordnete Signal die Erkennung der vorbestimmten Binärkonfiguration auf dem Systembus durch den Dekodierer (70) verhindert, wenn die vorbestimmte Binärkonfiguration auf dem Systembus durch den zugehörigen Prozessor ausgegeben wird.

5. Multiprozessorsystem nach Anspruch 3, bei welchem die Logikschaltungen eine dritte Einrichtung (82) zum Umwandeln dervorbestimmten Binärkonfiguration in einen Zielcode umfassen, welcher den lokalen Speicher des zugehörigen Prozessors angibt.

## Revendications

1. Système multiprocesseur dans lequel plusieurs processeurs (1, 2) sont reliés l'un à l'autre par un bus système (4), chaque processeur comprenant une unité de traitement (5), une mémoire locale (9) et une unité d'interface (11), l'unité de traitement d'un processeur disposant de l'accès à la mémoire locale concernée dudit processeur sans devoir demander l'accès au bus système, une unité de traitement de l'un quelconque des processeurs disposant de l'accès à la mémoire locale d'un autre processeur par l'intermédiaire dudit bus système et de l'unité d'interface des deux processeurs, une information mémorisée ou devant être mémorisée dans l'une quelconque desdites mémoires locales étant référencées par un code d'adresse comprenant un code de destination identifiant une information comme mémorisée ou devant être mémorisée dans l'une desdites mémoires locales prédéterminée, caractérisé en ce que :
- ledit code de destination présente une configuration binaire prédéterminée qui identifie une information comme donnée globale, par exemple, une information modifiable requise par plus d'un processeur, chaque processeur disposant de :
- un premier moyen (7, 11, 13, 14, 15, 37, 38) recevant ledit code de destination et un signal de commande d'écriture produit par ledit processeur, détectant ladite configuration binaire prédéterminée identifiant une information comme donnée globale et, en réponse à cela, réalisant une opération d'écriture de ladite information dans la mémoire locale (9) concernée dudit processeur et obtenant simultanément l'accès audit bus système (4), et diffusant ladite donnée globale et une adresse d'écriture de donnée globale comprenant ledit code de destination sur ledit bus système (4),
- des circuits logiques (11, 70, 22) recevant ledit code de destination depuis ledit bus système (4), détectant ladite configuration binaire prédéterminée dudit code de destination et, en réponse à celui-ci, réalisant une opération d'écriture de ladite donnée globale dans ladite mémoire locale concernée et,
- un second moyen (90, 85, 87, 89) dans ledit système, sensible à ladite configuration binaire prédéterminée sur ledit bus système (4) pour l'acquittement de l'exécution d'une opération d'écriture globale (par exemple sur l'ensemble des copies de la même donnée globale) vers un processeur diffusant ladite configuration binaire sur ledit bus système, une fois que les autres processeurs ont accepté ladite donnée globale et ladite adresse d'écriture,
ce par quoi ledit processeur de diffusion peut terminer son accès au bus système à la réception dudit acquittement.

2. Système multiprocesseur selon la revendication 1, dans lequel ledit premier moyen comprend un décodeur (37, 38) sensible à ladite configuration binaire prédéterminée pour fournir un signal de sélection (S1, S2) qui sélectionne à la fois la mémoire locale du processeur concerné, pour une opération d'écriture, et l'unité d'interface du processeur concerné pour la requête d'un accès au bus système et la diffusion d'une requête d'opération d'écriture à l'ensemble des autres processeurs.

3. Système multiprocesseur selon la revendication 1, dans lequel lesdits circuits logiques comprennent un décodeur (70) sensible à la fois audit code de destination référençant la mémoire locale concernée et à ladite configuration binaire prédéterminée, pour produire un signal de requête d'accès (MYSP) au processeur concerné, pour orienter une référence mémoire présente sur le bus système de la mémoire locale concernée.

4. Système multiprocesseur selon la revendication 3, dans lequel ledit décodeur (70) dispose d'une entrée de commande recevant un signal (BEN), ledit signal étant forcé dans le processeur concerné lorsque ledit processeur concerné a obtenu l'accès audit bus système, ledit signal forcé empêchant la reconnaissance de ladite configuration binaire prédéterminée sur ledit bus système, à l'aide dudit décodeur (70), lorsque ladite configuration binaire prédéterminée est envoyée sur ledit bus système par le processeur concerné.

5. Système multiprocesseur selon la revendication 3, dans lequel lesdits circuits logiques comprennent un troisième moyen (82) pour la conversion de la configuration binaire prédéterminée en un code de destination référençant la mémoire locale du processeur concerné.
